# EUROPEAN PATENT SPECIFICATION

(11) **EP 4 386 972 B1**
(45) Date of publication and mention of the grant of the patent: **08.07.2026**
(21) Application number: 23860720.4
(22) Date of filing: 07.08.2023
(51) Int. Cl.: H01M 50/591, H01M 50/588, H01M 50/211, H01M 50/105, H01M 50/249, H01M 10/6556, H01M 50/502, H01M 50/148, H01M 10/613, H01M 10/625

(54) **CELL ASSEMBLY AND BATTERY PACK AND VEHICLE INCLUDING THE SAME**
ZELLENANORDNUNG UND BATTERIEPACK SOWIE FAHRZEUG DAMIT
ENSEMBLE ÉLÉMENT ET BLOC-BATTERIE ET VÉHICULE LE COMPRENANT

(30) Priority: 31.08.2022 KR 20220110376; 19.05.2023 KR 20230065245
(43) Date of publication of application: 19.06.2024
(73) Proprietor: LG Energy Solution, Ltd., Seoul 07335 (KR)
(72) Inventor: PARK, Jin-Yong, Daejeon 34122 (KR); KWON, Woo-Yong, Daejeon 34122 (KR); KIM, Seung-Joon, Daejeon 34122 (KR); KIM, In-Soo, Daejeon 34122 (KR); SHIN, Song-Ju, Daejeon 34122 (KR); LEE, Myung-Woo, Daejeon 34122 (KR); KANG, Jong-Mo, Daejeon 34122 (KR); KIM, Kyung-Woo, Daejeon 34122 (KR); MOON, Duck-Hee, Daejeon 34122 (KR); LEE, Tae-Kyeong, Daejeon 34122 (KR); CHUNG, Se-Yun, Daejeon 34122 (KR); JEONG, Jong-Ha, Daejeon 34122 (KR); CHI, Ho-June, Daejeon 34122 (KR); HWANG, Ji-Soo, Daejeon 34122 (KR)
(74) Representative: Plasseraud IP
(86) International application number: PCT/KR2023/011607
(87) International publication number: WO 2024/049040

(56) References cited:
- CN-U- 212 874 615
- KR-A- 20130 143 183
- KR-A- 20180 068 379
- KR-A- 20180 135 701
- KR-A- 20200 033 666
- KR-A- 20220 083 440
- US-A1- 2019 260 099
- US-A1- 2021 305 651

## Description

### TECHNICAL FIELD

The present disclosure relates to a cell assembly and a battery pack and a vehicle including the same, and more particularly, to a cell assembly having a cell cover with variably adjustable width according to the thickness or number of pouch-type battery cells that are received in the cell cover and a battery pack and a vehicle including the same.

The present application claims priority to Korean Patent Application No. 10-2022-0110376 filed on August 31, 2022 and Korean Patent Application No. 10-2023-0065245 filed on May 19, 2023 in the Republic of Korea.

### BACKGROUND ART

With the development of mobile technology and the growing demand for mobile devices, the demand for secondary batteries as an energy source is rapidly increasing. Among secondary batteries, nickel-cadmium batteries or hydrogen-ion batteries have been used, but recently, lithium secondary batteries are being used in a wide range of applications. Compared to nickel-based secondary batteries, lithium secondary batteries have little or no memory effect, and thus have advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

**In** general, secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Pouch-type secondary batteries are light-weight and can be stacked with reduced dead spaces, so they have many advantages including high energy density per volume. However, pouch-type secondary batteries are relatively vulnerable to external impacts and low efficient in assembling.

A typical battery pack includes at least one battery module and a pack case accommodating the at least one battery module, wherein each battery module includes a plurality of pouch-type battery cells and a module case accommodating the plurality of pouch-type battery cells. An example of the battery module, the prior art document (Korean Patent Publication No. 10-2015-0044599) discloses a battery module including a cell stack including a plurality of pouch-type battery cells held and stacked using a plastic frame for stacking called a cartridge, a plate at two ends in the cell stack direction, a fastener such as a bolt and the like and a module case accommodating the cell stack. In this case, it is possible to protect the pouch-type battery cells from external impacts and prevent the pouch-type battery cells from moving, thereby ensuring electrical reliability.

However, assembling the pouch-type battery cells into a battery module and mounting each battery module in the battery pack may be unfavorable in terms of energy density. In particular, since the battery module includes not only the pouch-type battery cells but also many components such as the module case, the frame for stacking and the like, the battery pack may unnecessarily increase in weight and volume. To address this problem, recently, intensive efforts are being made in research and development of so-called cell to pack type battery pack in which the plurality of pouch-type battery cells is directly mounted in the pack case without forming the battery module.

However, in the mounting process, fixing the pouch-type battery cell having the soft pouch case to the pack case is not easy and there are damage risks. Additionally, there are concerns about durability against external impacts. As disclosed in KR Patent Publication No. 10-2023-0021607, Applicant has developed a cell cover covering a portion of a predetermined number of pouch-type battery cells. However, the number or thickness of pouch-type battery cells that can be received in the cell cover is preset. Accordingly, it is impossible to increase or decrease the number of pouch-type battery cells in the cell cover according to situations during the assembly process.

Further prior art is described in US2021/0305651A1.

### SUMMARY

### Technical Problem

The present disclosure is directed to providing a cell assembly including a cell cover with adjustable width according to the thickness or number of pouch-type battery cells to mount the pouch-type battery cells in a pack case with stability and space efficiency.

The present disclosure is further directed to providing a battery pack that is simple to assemble and has enhanced energy density by using the cell assembly.

The technical problem to be solved by the present disclosure is not limited to the above-described problems, and these and other problems will be clearly understood by those skilled in the art from the following description.

### Technical Solution

According to an aspect of the present disclosure as defined in claim 1, there is provided a cell assembly including a cell stack including two or more pouch-type battery cells stacked; and a cell cover covering two side portions of the cell stack along a widthwise direction of the cell stack and a top portion of the cell stack, wherein the cell cover is configured to adjust a width of the cell cover according to a width of the cell stack.

The cell cover may be configured to cover the cell stack such that a bottom portion of the cell stack is exposed.

The cell cover includes a width adjusting upper cover portion covering an upper surface portion of the cell stack, and having a variably adjustable width; a first side cover portion extending in a downward direction from an edge at one side of the width adjusting upper cover portion and covering one side portion of the cell stack; and a second side cover portion extending in the downward direction from an edge at the other side of the width adjusting upper cover portion and covering the other side portion of the cell stack.

The width adjusting upper cover portion includes a first upper cover portion integrally formed with the first side cover portion; a second upper cover portion separated from the first upper cover portion, and integrally formed with the second side cover portion; and a joint bracket unit connected to the first upper cover portion and the second upper cover portion, and configured to support the first upper cover portion and the second upper cover portion horizontally movably at a same height.

The joint bracket unit may include a cover plate portion disposed on the first upper cover portion and the second upper cover portion; and a link portion disposed in at least one end portion of the cover plate portion along a lengthwise direction of the cover plate portion, and having a bent shape to cover an end portion of the first upper cover portion and an end portion of the second upper cover portion in an inward direction.

The link portion may include a bent portion bent in the downward direction from an end portion of the cover plate portion; and a support portion extending in a direction perpendicular to the bent portion, and configured to support the first upper cover portion and the second upper cover portion together below the first upper cover portion and the second upper cover portion.

The joint bracket unit may have a first fastening hole at a preset location, and the first upper cover portion and the second upper cover portion may include at least one second fastening hole that vertically matches the first fastening hole by a relative movement with respect to the joint bracket unit.

The joint bracket unit may include a first cover plate portion disposed on the first upper cover portion and the second upper cover portion; a second cover plate portion disposed below the first upper cover portion and the second upper cover portion; and a connection portion covering an end portion of the first upper cover portion and an end portion of the second upper cover portion together and connecting the first cover plate portion to the second cover plate portion.

The first cover plate portion may have a first long hole at a preset location, each of the first upper cover portion and the second upper cover portion may have a second long hole, and the first long hole and the second long hole may match each other at least in part by the horizontal movement of the first upper cover portion or the second upper cover portion.

The cell assembly may further include a busbar assembly having a terminal busbar electrically connected to an electrode lead of the pouch-type battery cell.

According to another aspect of the present disclosure as defined in claim 9, there is provided a battery pack including a cell assembly group including the cell assemblies stacked in a direction; and a pack case including a pack tray on which the cell assembly group is mounted, and a pack cover covering the cell assembly group.

The cell assembly group may be adhered and fixed to an upper surface of the pack tray.

The pack tray may include a cooling channel in which a cooling medium flows.

The pack tray may have a fixing groove to which a lower end of the cell cover is inserted and fixed.

According to still another aspect of the present disclosure as defined in claim 13, there is provided a vehicle including the battery pack.

### Advantageous Effects

According to an aspect of the present disclosure, it may be possible to provide the cell assembly including the cell cover with adjustable width according to the thickness or number of pouch-type battery cells that are received in the cell cover.

According to another aspect of the present disclosure, it may be possible to simplify the assembly process of the battery pack and improve energy density by using the cell assembly to assemble the battery pack.

The present disclosure may have many other effects, and these effects will be described in each embodiment, or regarding effects that can be easily inferred by those skilled in the art, the corresponding description is omitted.

### BRIEF DESCRIPTION OF THE DRAWINGS

FIG. 1 is a schematic perspective view of a cell assembly according to an embodiment of the present disclosure.
FIG. 2 is a schematic exploded perspective view of the cell assembly of FIG. 1.
FIG. 3 is a perspective view showing the main components of a cell cover according to an embodiment of the present disclosure.
FIG. 4 is an assembled perspective view of the cell cover of FIG. 3.
FIG. 5 is a partial enlarged view of the cell cover of FIG. 4.
FIG. 6 is a diagram showing an example of adjusting up the width of the cell cover of FIG. 4.
FIG. 7 is a partial enlarged view of the cell cover of FIG. 6.
FIG. 8 is a diagram showing examples of width adjustment of a cell cover according to an embodiment of the present disclosure to receive pouch-type battery cells according to situations.
FIG. 9 is a perspective view showing the main components of a cell cover according to another embodiment of the present disclosure.
FIG. 10 is an assembled perspective view of the cell cover of FIG. 9.
FIG. 11 is a perspective view showing the main components of a cell cover according to still another embodiment of the present disclosure.
FIG. 12 is an assembled perspective view of the cell cover of FIG. 11.
FIG. 13 is a schematic diagram of a battery pack according to an embodiment of the present disclosure.
FIG. 14 is a partial cross-sectional view of a battery pack according to an embodiment of the present disclosure.
FIG. 15 is a schematic diagram of a vehicle including a battery pack according to an embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspect of the present disclosure and are not intended to be limiting.

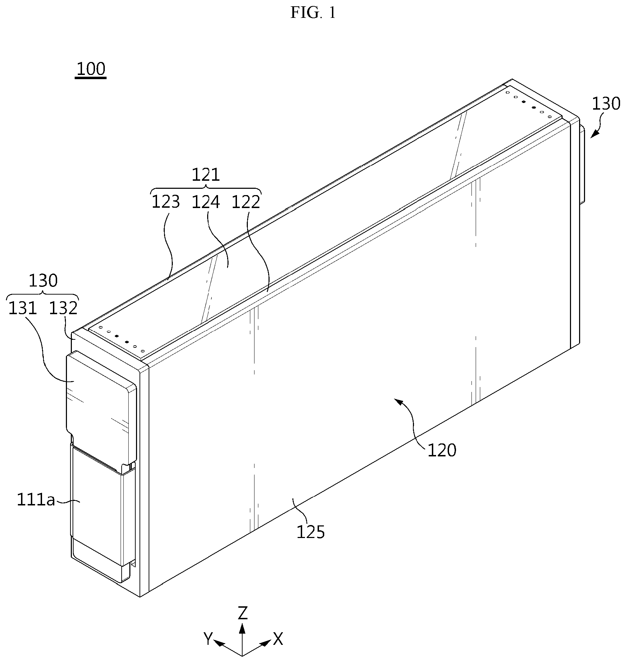

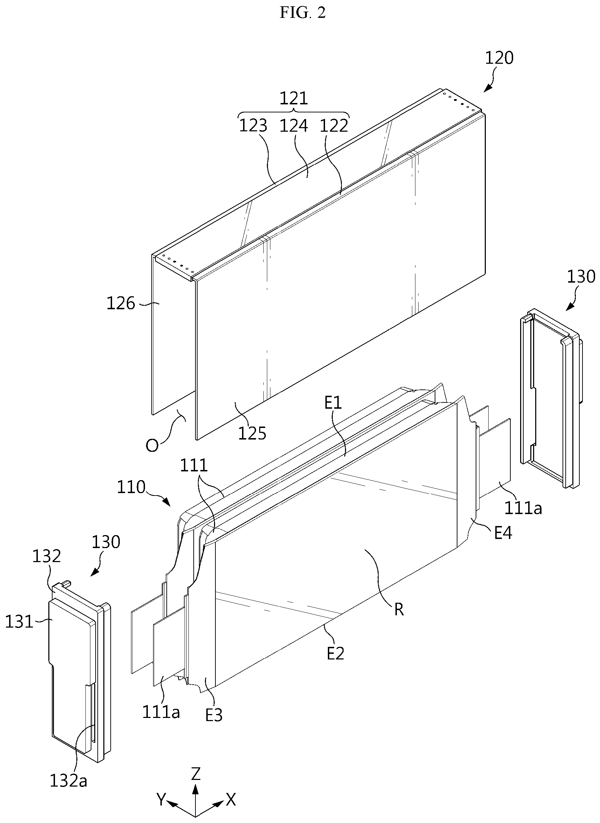

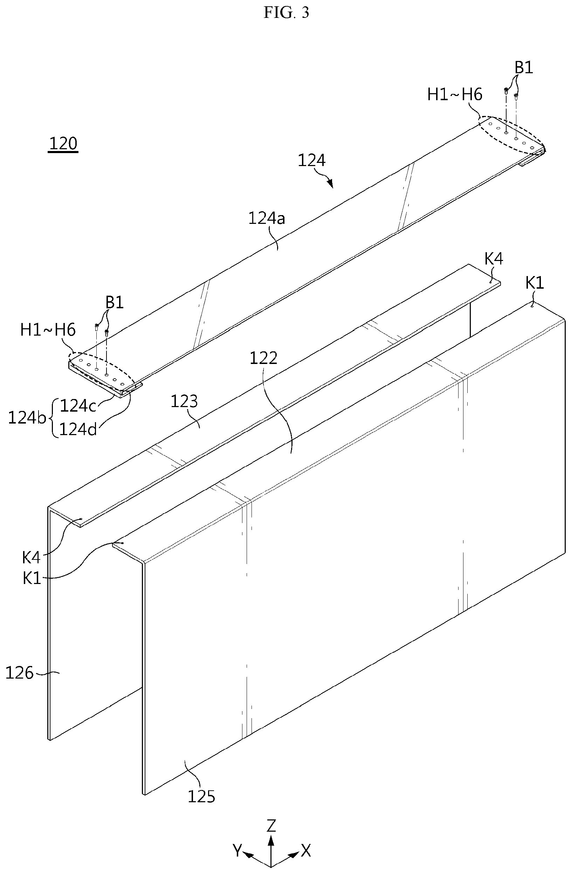

FIG. 1 is a schematic perspective view of a cell assembly according to an embodiment of the present disclosure, FIG. 2 is a schematic exploded perspective view of the cell assembly of FIG. 1, and FIG. 3 is a perspective view showing the main components of a cell cover according to an embodiment of the present disclosure.

Referring to FIGS. 1 to 3, the cell assembly 100 according to an embodiment of the present disclosure includes a cell stack 110 and the cell cover 120.

The cell stack 110 may include one pouch-type battery cell 111 or two or more pouch-type battery cells 111 stacked. The pouch-type battery cell 111 may be manufactured by receiving an electrode assembly and an electrolyte in a pouch packaging of a laminate film including a soft metal and sealing the pouch packaging. Here, the electrode assembly includes a positive electrode plate, a negative electrode plate and a separator interposed between the positive electrode plate and the negative electrode plate.

Referring to FIG. 2, the pouch-type battery cell 111 may include an electrode lead 111a that acts as an electrode lead, and the electrode lead 111a may be electrically connected to the electrode assembly and exposed to the outside of the pouch packaging. The electrode lead 111a includes a pair of a positive electrode lead and a negative electrode lead. Here, the positive electrode lead and the negative electrode lead may be disposed at front and rear end portions in the lengthwise direction (X direction) of the pouch-type battery cell 111.

Additionally, the pouch-type battery cell 111 may have a receiving portion R in which the electrode assembly is received, and four edge portions E1~E4 disposed around the receiving portion R. The four edge portions E1~E4 include an upper edge portion E1, a lower edge portion E2, a front edge portion E3 and a rear edge portion E4, for example, as shown in FIG. 2, on the basis of the receiving portion R in the pouch-type battery cell 111 standing upright.

Here, the edge portions E1~E4 may be all sealing portions or three edge portions E2,E3,E4 or E1,E3,E4 except the upper edge portion E1 or the lower edge portion E2 may be sealing portions. In addition, the pouch-type battery cell 111 using a process of folding a sheet of laminate film when receiving the electrode assembly has three sealing portions, and the pouch-type battery cell 111 using a process of joining the edges of two sheets of laminate films when receiving the electrode assembly has four sealing portions. Accordingly, the three edge portions E2,E3,E4 or E1,E3,E4 or the four edge portions E1~E4 of the pouch-type battery cell 111 may be sealing portions.

The cell cover 120 may be configured to cover at least one pouch-type battery cell 111. In other words, the cell cover 120 may be configured to cover the cell stack 110. In particular, the cell cover 120 may be configured to cover the cell stack 110 such that a bottom portion of the cell stack 110 is exposed. The cell cover 120 may be configured to cover two side portions of the cell stack 110 in the widthwise direction of the cell stack 110 and a top portion of the cell stack 110.

The cell cover 120 may be made of various types of materials to ensure stiffness. In particular, the cell cover 120 may be made of metal. When metal is used, it may be possible to keep the pouch-type battery cells 111 stacked more stably, and protect the pouch-type battery cells 111 from external impacts more safely. In particular, the cell cover 120 may be made of steel, especially, stainless steel (SUS). For example, the cell cover 120 may be fully made of SUS.

Accordingly, when the cell cover 120 covers the cell stack 110, it may be possible to stably keep the pouch-type battery cells 111 stacked and upright. In particular, the pouch-type battery cells 111 may be vulnerable to external impacts and have low hardness due to the outer packaging made of a soft material. Accordingly, it is not easy to receive the pouch-type battery cells 111 in a pack case 200. However, in the case of the present disclosure, since the pouch-type battery cells 111 are received in the cell cover 120, it may be possible to prevent damage or breakage of the pouch-type battery cells 111 from external impacts and stably keep them stacked in the pack case 200. Accordingly, there is no need to add, to a battery pack 10, a module case, a frame for stacking, a fastener for maintaining the stack and so on. As a result, it may be possible to receive a larger number of battery cells 111 in the pack case 200, thereby enhancing energy density of the battery pack 10.

Referring to FIGS. 1 and 2, the cell assembly 100 according to an embodiment of the present disclosure may further include a busbar assembly 130.

The busbar assembly 130 may include a terminal busbar 131 electrically connected to the electrode lead 111a of the pouch-type battery cell 111 received in the cell cover 120, and be coupled to a front open end portion O and a rear open end portion of the cell cover 120.

Specifically, referring to FIG. 2, the busbar assembly 130 according to this embodiment may include the terminal busbar 131, and a busbar frame 132 that supports the terminal busbar 131 and is mounted and demounted on/from the front open end portion O or the rear open end portion of the cell cover 120 by snap-fit.

The terminal busbar 131 may be made of, for example, metal such as copper, nickel and aluminum, and the busbar frame 132 may be made of, for example, an electrically insulating material such as plastics.

The busbar frame 132 may be approximately in the shape of a plate of a sufficient size to cover the front open end portion O or the rear open end portion of the cell cover 120, and have a lead slit 132a to allow the electrode lead 111a of the pouch-type battery cell 111 to pass through. The electrode lead 111a of the pouch-type battery cell 111 may be connected to the terminal busbar 131 through the lead slit 132a. In this instance, a welding process may be performed to fix the electrode lead 111a to the terminal busbar 131.

For example, in FIG. 2, the positive electrode leads of two pouch-type battery cells 111 may be connected to the terminal busbar 131 at the front open end portion O of the cell cover 120, and the negative electrode leads may be connected to the terminal busbar 131 at the rear open end portion of the cell cover 120. In this case, the terminal busbar 131 connected to the positive electrode leads may act as a positive terminal of the cell assembly 100, and the terminal busbar 131 connected to the negative electrode leads may act as a negative terminal of the cell assembly 100.

Meanwhile, the cell cover 120 according to the present disclosure is configured to adjust the width of the cell cover 120 according to the width of the cell stack 110.

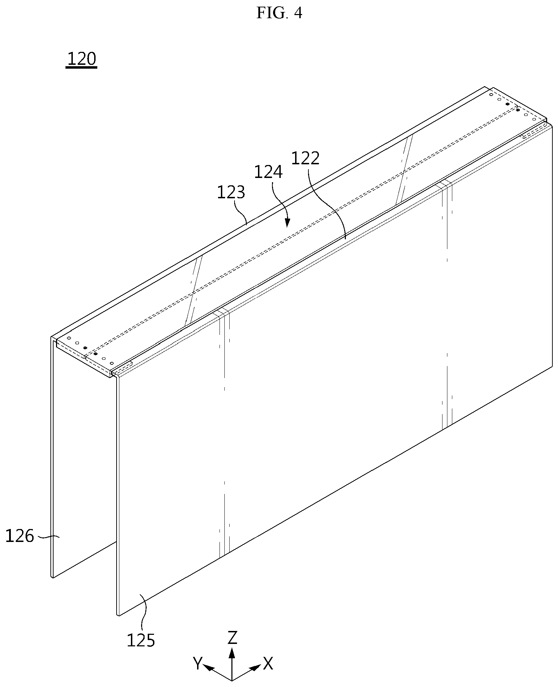

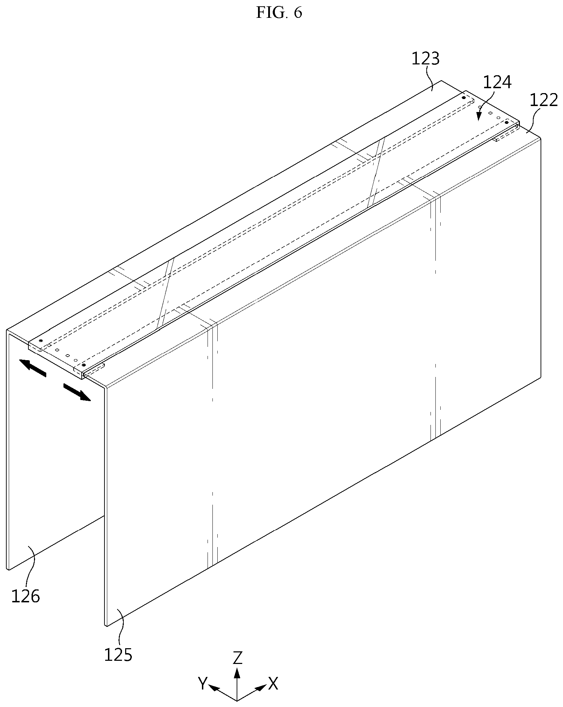

For example, as shown in FIG. 2, the cell cover 120 may include a width adjusting upper cover portion 121, a first side cover portion 125 and a second side cover portion 126, and like the exemplary configuration shown in FIGS. 4 and 6, the width of the cell cover may be adjusted by variably adjusting the width of the width adjusting upper cover portion 121. Hereinafter, the cell cover 120 will be described in more detail.

First, the first side cover portion 125 may extend in the downward direction from an edge line at one side along the widthwise direction (Y direction) of the width adjusting upper cover portion 121. The first side cover portion 125 may be longer than the receiving portion R of the pouch-type battery cell 111.

The first side cover portion 125 may be configured to cover one side portion of the cell stack 110. In particular, as shown in FIG. 1, the first side cover portion 125 may be configured to fully cover one side portion of the cell stack 110 in order to prevent the exposure of one side portion of the cell stack 110.

The second side cover portion 126 may extend in the downward direction from an edge line at the other side along the widthwise direction (Y direction) of the width adjusting upper cover portion 121. Preferably, the second side cover portion 126 and the first side cover portion 125 may be parallel and symmetrical to each other.

The second side cover portion 126 may be configured to cover the other side portion of the cell stack 110. In particular, the second side cover portion 126 may be configured to fully cover the other surface portion of the cell stack 110 in order to prevent the exposure of the other side portion of the cell stack 110.

The width adjusting upper cover portion 121 may be configured to cover the upper surface portion of the cell stack 110. In particular, as shown in FIG. 1, the width adjusting upper cover portion 121 may be configured to fully cover the upper surface portion of the cell stack 110 in order to prevent the exposure of the upper surface portion of the cell stack 110.

With the cell cover 120, for example, when the cell assembly 100 is disposed on the bottom surface of the pack case 200, it may be possible to stably keep the pouch-type battery cells 111 stacked and upright, and cool the pouch-type battery cells 111 by the indirect/direct contact between a cooling medium and the lower edge portions of the pouch-type battery cells 111.

In particular, as shown in FIG. 3, the width adjusting upper cover portion 121 includes a first upper cover portion 122 integrally formed with the first side cover portion 125, and a second upper cover portion 123 separated from the first upper cover portion 122 and integrally formed with the second side cover portion 126. Additionally, the width adjusting upper cover portion 121 may include a joint bracket unit 124 connected to the first upper cover portion 122 and the second upper cover portion 123, and configured to support the first upper cover portion 122 and the second upper cover portion 123 horizontally movably at the same height.

The first upper cover portion 122 may be in the shape of a plate that is bent from the upper end of the first side cover portion 125. Additionally, the first upper cover portion 122 may have a width that is shorter than the width of the joint bracket unit 124.

The second upper cover portion 123 may be in the shape of a plate that is bent from the upper end of the second side cover portion 126 and have a width that is shorter than the width of the joint bracket unit 124. The first upper cover portion 122 and the second upper cover portion 123 may be configured such that at least a portion of each of the first upper cover portion 122 and the second upper cover portion 123 is inserted into the joint bracket unit 124 as described below. Preferably, the first upper cover portion 122 and the second upper cover portion 123 may be symmetrical to each other.

That is, the first upper cover portion 122 and the first side cover portion 125 may be formed as a part, and the second upper cover portion 123 and the second side cover portion 126 may be formed as another part. The two parts may be linked by the joint bracket unit 124 as described below.

As shown in FIG. 3, the joint bracket unit 124 according to this embodiment may include a cover plate portion 124a and a link portion 124b.

The cover plate portion 124a may be in the shape of a plate having a length corresponding to a length of the cell cover 120. Additionally, the cover plate portion 124a may have a width that is at least equal to or smaller than the sum of the width of the first upper cover portion 122 and the width of the second upper cover portion 123.

The cover plate portion 124a may act as a shield to prevent the exposure of the upper surface portion of the cell stack 110 between the first upper cover portion 122 and the second upper cover portion 123 when the first upper cover portion 122 and the second upper cover portion 123 as described below are placed with a gap therebetween.

The link portion 124b is the component for connecting the joint bracket unit 124 to the first upper cover portion 122 or the joint bracket unit 124 to the second upper cover portion 123. The link portion 124b may be disposed in at least one end portion of the cover plate portion 124a along the lengthwise direction (X direction) of the cover plate portion 124a, and have a bent shape to cover the end portion of the first upper cover portion 122 and the end portion of the second upper cover portion 123 in the inward direction.

More specifically, as shown in FIG. 3, the link portion 124b may include a bent portion 124c bent in the downward direction from the end portion of the cover plate portion 124a, and a support portion 124d extending in a direction perpendicular to the bent portion 124c and configured to support the first upper cover portion 122 and the second upper cover portion 123 together below the first upper cover portion 122 and the second upper cover portion 123.

The support portion 124d may be spaced a predetermined distance apart from the cover plate portion 124a and have a plate surface parallel to the cover plate portion 124a. The distance between the support portion 124d and the cover plate portion 124a may correspond to the thickness of the first upper cover portion 122 and the second upper cover portion 123.

With the link portion 124b, as shown in FIGS. 3 to 5, the first upper cover portion 122 may be inserted into the space between the cover plate portion 124a and the link portion 124b. **In** particular, as shown in FIG. 4, the two end portions of the first upper cover portion 122 may be supported by two link portions 124b. **In** this case, the first upper cover portion 122 may be connected to the joint bracket unit 124 so that the first upper cover portion 122 is not allowed to move in the front-rear direction (±X direction) and the up-down direction (±Z direction) and only allowed to move in the left-right direction (±Y direction).

The two end portions of the second upper cover portion 123 may be inserted into the space between the cover plate portion 124a and the link portion 124b in a direction facing the two end portions of the first upper cover portion 122. As shown in FIG. 4, the two end portions of the second upper cover portion 123 may be also supported by the two link portions 124b, and the second upper cover portion 123 may be connected to the joint bracket unit 124 so that the second upper cover portion 123 is not allowed to move in the front-rear direction (±X direction) and the up-down direction (±Z direction), and only allowed to move in the left-right direction (±Y direction).

With the cell cover 120, the horizontal width of the cell cover 120 may be adjusted by relatively moving the first upper cover portion 122 or the second upper cover portion 123 in the left-right direction with respect to the joint bracket unit 124. For example, as shown in FIG. 4, in a state that the first upper cover portion 122 and the second upper cover portion 123 are coupled to the joint bracket unit 124, as shown in FIG. 6, each of the first upper cover portion 122 and the second upper cover portion 123 is partially pulled from the joint bracket unit 124. Accordingly, as the gap between the first side cover portion 125 and the second side cover portion 126 increases, the internal space of the cell cover 120 may be expanded.

Additionally, the cell cover 120 according to this embodiment may be configured such that the gap between the first upper cover portion 122 and the second upper cover portion 123 may be adjusted and the adjusted gap may be maintained.

To this end, the joint bracket unit 124 may include at least one first fastening hole H1~H6 at a preset location, and the first upper cover portion 122 and the second upper cover portion 123 may include at least one second fastening hole K1,K4 that vertically match the first fastening holes H1~H6 by the relative movement with respect to the joint bracket unit 124. Additionally, a fastener may be inserted into the first fastening holes H1~H6 and the second fastening holes K1,K4 that vertically match each other. At least one of the first fastening holes H1~H6 or the second fastening holes K1,K4 may have screw threads, and the fastener may be a bolt B1 that may be fastened to the screw threads.

For example, as shown in FIGS. 3 and 4, the first fastening holes H1~H6 and the second fastening holes K1,K4 may be disposed at two end portions of the width adjusting upper cover portion 121. Here, six first fastening holes H1~H6 may be disposed at each of one end portion and the other portion of the joint bracket unit 124, and one second fastening hole K1,K4 may be disposed at each of one end portion and the other portion of the first upper cover portion 122 and each of one end portion and the other portion of the second upper cover portion 123.

Additionally, the six first fastening holes H1~H6 may be disposed at an overlapping area of the cover plate portion 124a and the support portion 124d in the joint bracket unit 124, and be spaced apart from each other along the widthwise direction of the joint bracket unit 124. Additionally, the second fastening hole K1 of the first upper cover portion 122 and the second fastening hole K4 of the second upper cover portion 123 may be located on the same line as the six first fastening holes H1~H6.

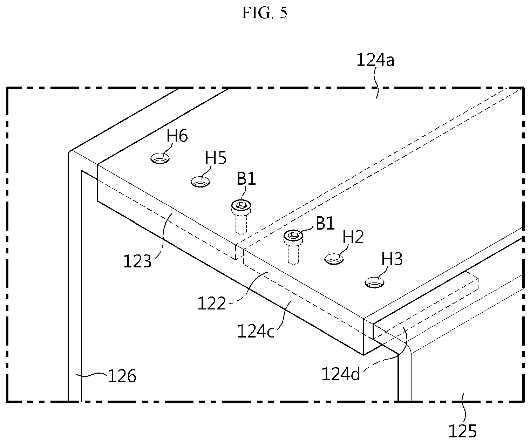

Accordingly, when each of the two end portions of the first upper cover portion 122 and the two end portions of the second upper cover portion 123 is pushed into the space between the cover plate portion 124a and the support portion 124d of the joint bracket unit 124, one of the first fastening holes H1~H6 may vertically match the second fastening hole K1 or the second fastening hole K4 of the first upper cover portion. In this case, for example, as shown in FIG. 5, the first upper cover portion 122 and the joint bracket unit 124 may be fixed and coupled by installing the bolt in the second fastening hole K1 of the first upper cover portion 122 and the first fastening hole H1 among the first fastening holes H1~H6 of the joint bracket unit 124 that matches it. Likewise, the second upper cover portion 123 and the joint bracket unit 124 may be fixed and coupled by installing the bolt B1 in the second fastening hole K4 of the second upper cover portion 123 and the first fastening hole H4 among the first fastening holes H1~H6 of the joint bracket unit 124 that matches it.

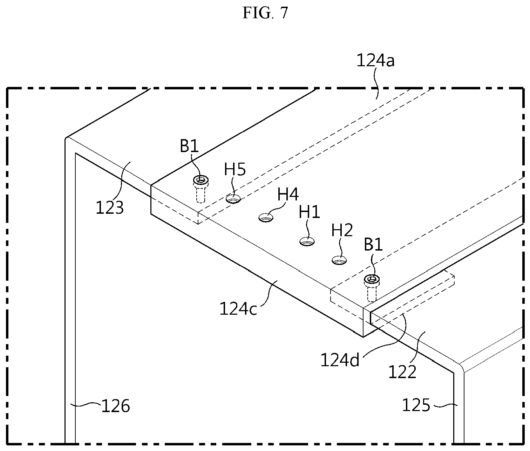

Meanwhile, when extending the width of the cell cover 120, after loosening the bolt B1 from the cell cover 120 of FIG. 5, at least one of the first upper cover portion 122 or the second upper cover portion 123 is partially pulled from the joint bracket unit 124. Additionally, for example, as shown in FIG. 7, the first upper cover portion 122 and the joint bracket unit 124 may be fixed and coupled by installing the bolt B1 in the second fastening hole K1 of the first upper cover portion 122 and the first fastening hole H3 among the first fastening holes H1~H6 of the joint bracket unit 124 that matches it. Likewise, the second upper cover portion 123 and the joint bracket unit 124 may be fixed and coupled by installing the bolt in the second fastening hole K4 of the second upper cover portion 123 and the first fastening hole H6 among the first fastening holes H1~H6 of the joint bracket unit 124 that matches it.

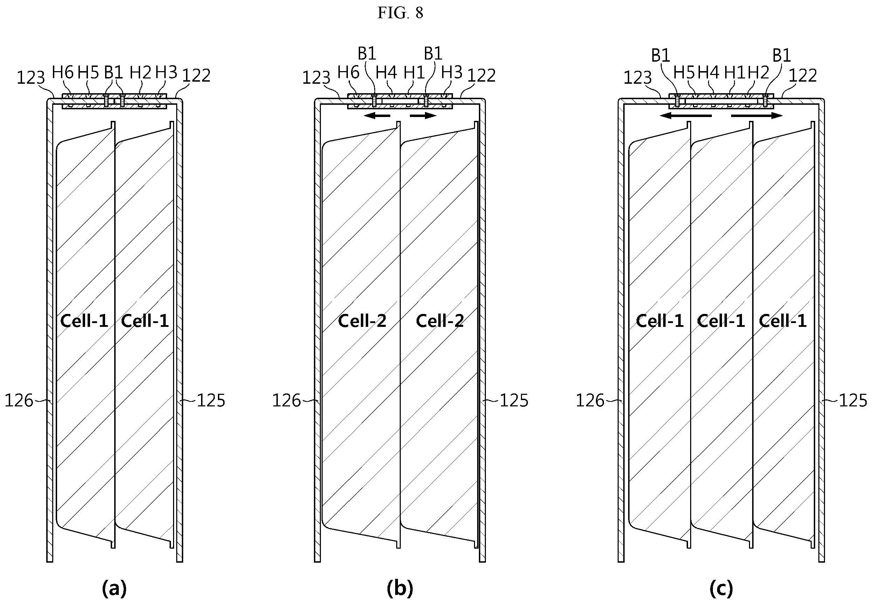

Accordingly, since the width of the cell cover 120 according to an embodiment of the present disclosure as described above can be adjusted, for example, as shown in FIGS. 8(a), 8(b) and 8(c), it may be possible to receive the pouch-type battery cells 111 having different thicknesses as indicated by "Cell_1" and "Cell_2" or additional pouch-type battery cell(s) 111 using the same cell cover 120.

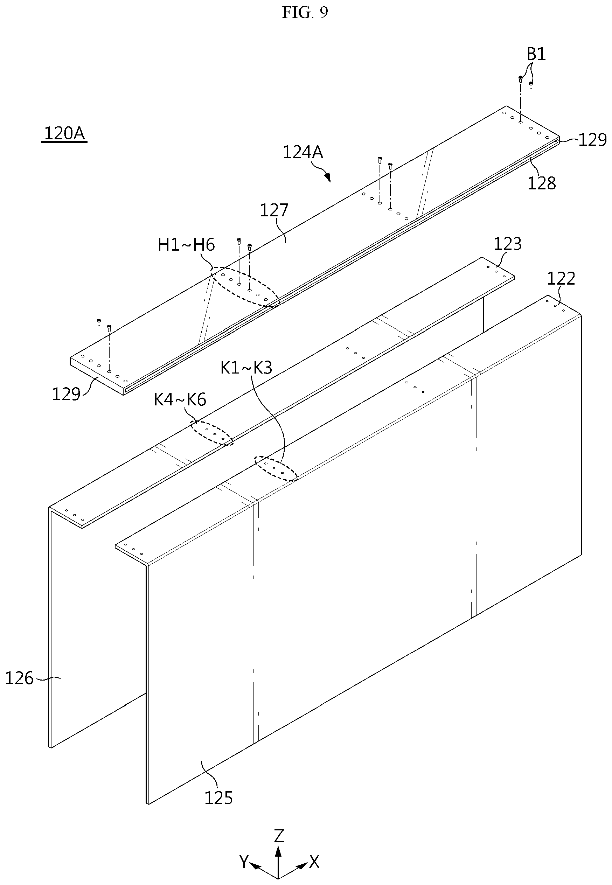

Subsequently, the cell assemblies according to other embodiments of the present disclosure will be described with reference to FIGS. 9 to 12.

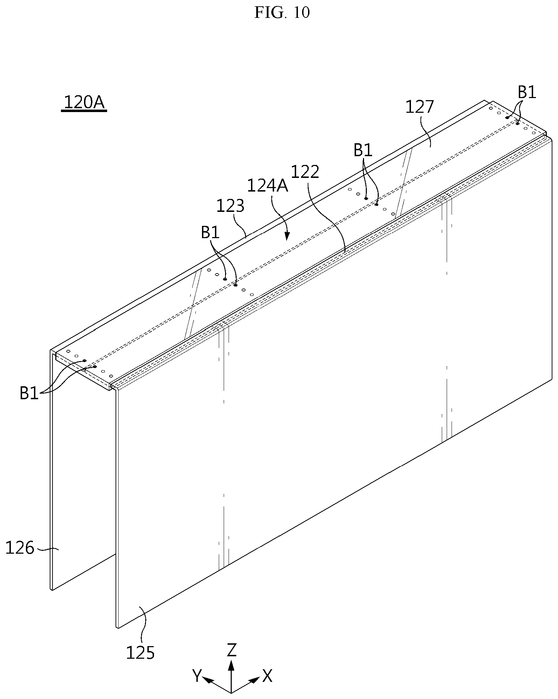

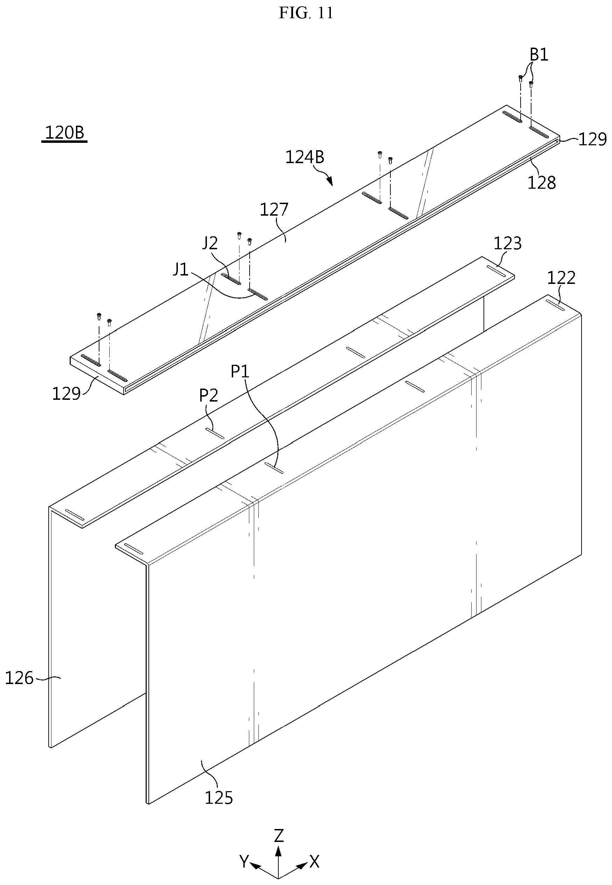

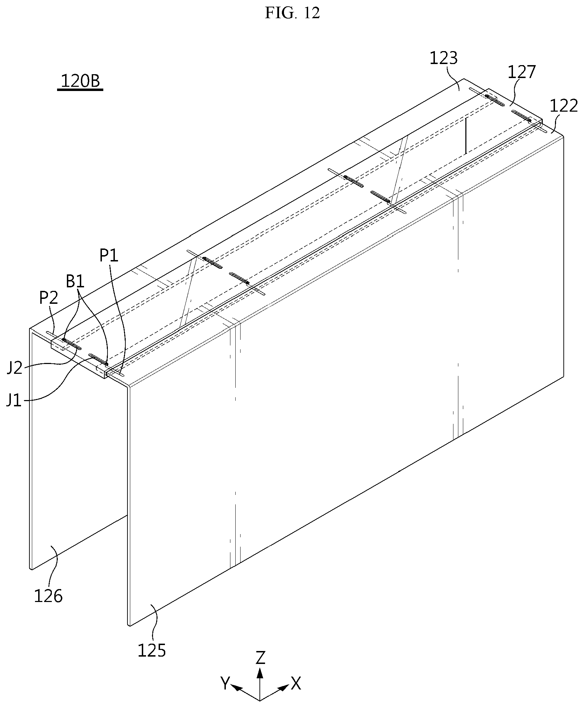

FIG. 9 is a perspective view showing the main components of the cell cover 120A according to a second embodiment of the present disclosure, FIG. 10 is an assembled perspective view of the cell cover 120A of FIG. 9, FIG. 11 is a perspective view showing the main components of the cell cover 120B according to a third embodiment of the present disclosure, and FIG. 12 is an assembled perspective view of the cell cover 120B of FIG. 11.

The same element as the previous embodiment is given the same reference sign, and a redundant description of the same element is omitted and difference(s) between this embodiment and the previous embodiment will be described.

When compared with the previous embodiment, the other embodiments of the present disclosure is mainly different in the joint bracket unit 124 of the cell cover and the other components are substantially the same. Accordingly, the following description will be made based on the joint bracket unit 124.

As opposed to the joint bracket unit 124 of the previous embodiment, the joint bracket unit 124A of the cell assembly according to the second embodiment of the present disclosure may cover and support not only the two end portions of first and second upper cover portions 122,123 but also parts between the two end portions of the first and second upper cover portions 122,123.

As shown in FIGS. 9 and 10, the joint bracket unit 124A according to the second embodiment may include a first cover plate portion 127 disposed on the first upper cover portion 122 and the second upper cover portion 123, a second cover plate portion 128 disposed below the first upper cover portion 122 and the second upper cover portion 123, and a connection portion 129 covering the end portion of the first upper cover portion 122 and the end portion of the second upper cover portion 123 together and connecting the first cover plate portion 127 to the second cover plate portion 128.

The distance between the first cover plate portion 127 and the second cover plate portion 128 may correspond to the thickness of the first upper cover portion 122 and the second upper cover portion 123. Additionally, the joint bracket unit 124 may be configured to push the first upper cover portion 122 and the second upper cover portion 123 into the space between the first cover plate portion 127 and the second cover plate portion 128.

The joint bracket unit 124A according to the second embodiment of the present disclosure may have higher durability and support the first and second upper cover portions 122,123 more stably than the joint bracket unit 124 of the previous embodiment. Accordingly, in particular, it may be effective when applied to the cell cover 120A that will accommodate the long pouch-type battery cells 111.

Additionally, as shown in FIG. 9, the joint bracket unit 124A according to the second embodiment may have, for example, six first fastening holes H1~H6 arranged at a predetermined interval along the lengthwise direction (X direction) of the joint bracket unit 124A. That is, the first fastening holes H1~H6 may be disposed in not only the two end portions of the joint bracket unit 124A but also the area between them.

Additionally, the second fastening holes K1~K3 of the first upper cover portion 122 and the second fastening holes K4~K6 of the second upper cover portion 123 may be located on the same line as the six first fastening holes H1~H6. In this instance, as shown in FIG. 9, the first upper cover portion 122 may have three second fastening holes K1~K3 arranged at a predetermined interval, and the second upper cover portion 123 may have three second fastening holes K4~K6 arranged at a predetermined interval.

Accordingly, as shown in FIG. 10, the first upper cover portion 122 and the joint bracket unit 124 may be fixed and coupled by installing the bolt B1 in the second fastening hole K1~K3 of the first upper cover portion 122 and the first fastening hole H1 among the first fastening holes H1~H6 of the joint bracket unit 124 that matches it. Likewise, the second upper cover portion 123 and the joint bracket unit 124 may be fixed and coupled by installing the bolt B1 in the second fastening hole K4~K6 of the second upper cover portion 123 and the first fastening hole H4 among the first fastening holes H1~H6 of the joint bracket unit 124 that matches it.

As described above, when extending the width of the cell cover 120, after loosening the bolt B1, at least one of the first upper cover portion 122 or the second upper cover portion 123 is partially pulled from the joint bracket unit 124 and the bolt B1 is installed again in the first fastening holes H1~H6 and the second fastening holes K1~K6 that vertically match.

Meanwhile, as shown in FIG. 11, the joint bracket unit 124B of the cell assembly according to the third embodiment of the present disclosure and the joint bracket unit 124A of the second embodiment are different in the shape of the fastening hole. That is, the first cover plate portion 127 of the joint bracket unit 124B according to the third embodiment may have first long holes J1,J2 at a preset location, and the first upper cover portion 122 and the second upper cover portion 123 may have second long holes P1,P2, respectively. By the horizontal movement of the first upper cover portion 122 or the second upper cover portion 123, the first long holes J1,J2 and the second long holes P1,P2 may match each other at least in part. For example, as shown in FIG. 12, the joint bracket unit 124B and the first and second upper cover portions 122,123 may be fixed and coupled by installing the bolt at a location at which the first long holes J1,J2 of the joint bracket unit 124B and the second long holes P1,P2 of the first and second upper cover portions 122,123 vertically match each other.

In the case of the first or second embodiment, it is necessary to accurately match the first fastening holes H1~H6 and the second fastening holes K1~K6 to bolt-connect the joint bracket unit 124 to the first upper cover portion 122 or the joint bracket unit 124 to the second upper cover portion 123, so it is difficult to finely adjust the width of the cell cover 120. However, in the case of the third embodiment, in a range in which the first long holes J1,J2 and the second long holes P1,P2 match or align each other, the joint bracket unit 124B and the first upper cover portion 122 or the joint bracket unit 124B and the second upper cover portion 123 may be fixed with the bolt B1. Accordingly, according to the third embodiment, it may be possible to adjust the width of the cell cover 120B more finely than the previous embodiment.

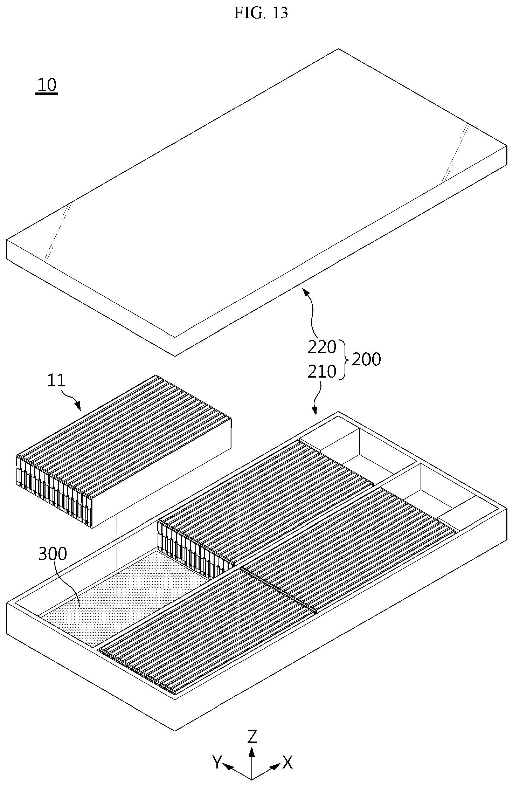

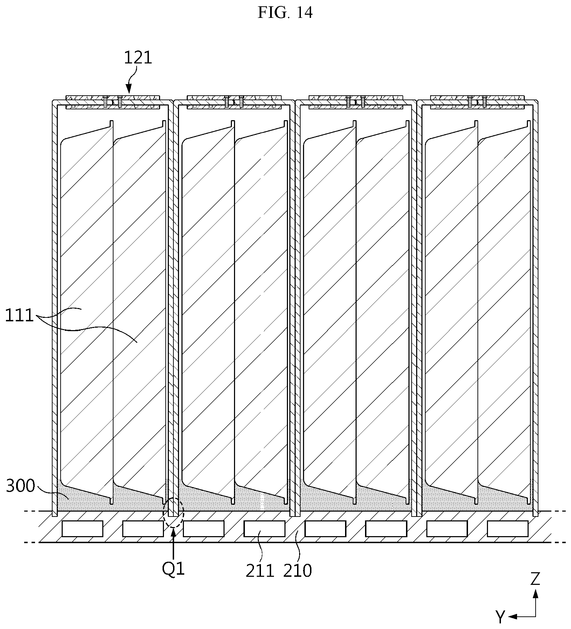

FIG. 13 is a schematic diagram of the battery pack 10 according to an embodiment of the present disclosure, and FIG. 14 is a partial cross-sectional view of the battery pack 10 according to an embodiment of the present disclosure.

Referring to FIGS. 13 and 14, the battery pack 10 according to an embodiment of the present disclosure may include a cell assembly group 11 including the cell assemblies 100 stacked in a direction and the pack case 200 accommodating at least one cell assembly group 11.

As shown in FIG. 13, the cell assembly group 11 may include a predetermined number of cell assemblies 100 stacked with the first side cover portion 125 or the second side cover portion 126 facing each other. Additionally, although not shown in the drawings for convenience, the cell assemblies 100 may be connected in series or in parallel.

As shown in FIG. 13, the pack case 200 includes a pack tray 210 and a pack cover 220. The pack tray 210 may be in the shape of a box with an open top, so the plurality of cell assembly groups 11 may be received in the internal space. Additionally, the pack cover 220 may be in the shape of a cover that covers the open top of the pack tray 210. In this instance, the pack cover 220 may be in the shape of a box with an open bottom. The pack case 200 may be made of plastics or metals. The material of the pack case 200 may include various types of packaging materials of the battery pack 10 known at the time of filing the application.

In particular, as shown in FIG. 13, a bottom plate of the pack tray 210 on which the cell assembly group 11 is mounted may have a thermally conductive adhesive 300. Accordingly, the cell assembly group 11 may be adhered and fixed to the pack tray 210.

Additionally, as shown in FIG. 14, the pack tray 210 may include a cooling channel 211 in which a cooling medium flows. That is, the pack tray 210 itself may act as a heatsink due to the cooling channel 211 in the bottom plate. Here, the heatsink refers to an object that absorbs heat and carries it away from another object through direct/indirect thermal contact.

In particular, according to the present disclosure, as described above, the cell cover 120 may be configured such that the lower edge portion E2 of the pouch-type battery cell 111 is exposed. Accordingly, when the cell assembly group 11 is mounted on the bottom plate of the pack tray 210, the lower edge portion E2 of the pouch-type battery cell 111 may directly contact the bottom plate of the pack tray 210. In this instance, the thermally conductive adhesive 300 filled between the lower edge portion E2 of the pouch-type battery cell 111 and the bottom plate of the pack tray 210 may improve fixation of the pouch-type battery cells 111 and heat dissipation performance. Accordingly, it may be possible to transfer heat from all the pouch-type battery cells 111 mounted in the battery pack 10 to the pack case 200 more effectively, thereby enhancing cooling performance of the battery pack 10. Additionally, the battery pack 10 according to the present disclosure does not need a cooling structure between the pouch-type battery cell 111 and the pack case 200, thereby achieving efficient cooling performance.

Additionally, the pack tray 210 may have a fixing groove to which the lower end of the cell cover 120 is inserted and fixed. That is, the lower end of the first side cover portion 125 and the lower end of the second side cover portion 126 of the cell cover 120 may be inserted into the bottom plate of the pack tray 210. For example, as indicated by 'Q1' in FIG. 14, a portion of the lower end of each cell cover 120 may be inserted and fixed to the bottom plate of the pack tray 210. Accordingly, the cell covers 120 may stand upright in the pack tray 210 more stably.

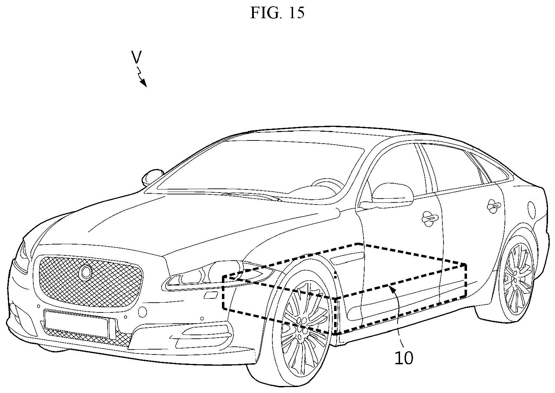

Meanwhile, the battery pack 10 according to the present disclosure may be used as an energy source for driving a vehicle. That is, the vehicle V according to the present disclosure may include the battery pack 10 according to the present disclosure as shown in FIG. 15. Here, the vehicle according to the present disclosure may include, for example, a predetermined vehicle that is powered by electricity such as an electric vehicle or a hybrid electric vehicle. Additionally, in addition to the battery pack 10 according to the present disclosure, the vehicle according to the present disclosure may further include a variety of other components included in the vehicle, for example, a vehicle body or a motor.

The terms indicating directions such as upper, lower, left, right, front and rear are used for convenience of description, but it is obvious to those skilled in the art that the terms may change depending on the position of the stated element or an observer.

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims.

## Claims

1. A cell assembly (100), comprising:
a cell stack (110) including two or more pouch-type battery cells (111) stacked; and
a cell cover (120) covering two side portions of the cell stack (110) along a widthwise direction of the cell stack (110) and a top portion of the cell stack (110), wherein the cell cover (120) is configured to adjust a width of the cell cover (120) according to a width of the cell stack (110) and includes:
a width adjusting upper cover portion (121) covering an upper surface portion of the cell stack (110), and having a variably adjustable width;
a first side cover portion (125) extending in a downward direction from an edge (E1) at one side of the width adjusting upper cover portion (121) and covering one side portion of the cell stack (110); and
a second side cover portion (126) extending in the downward direction from an edge at the other side of the width adjusting upper cover portion (121) and covering the other side portion of the cell stack (110),
the cell assembly (100) being **characterized in that** the width adjusting upper cover portion (121) includes:
a first upper cover portion (122) integrally formed with the first side cover portion (125);
a second upper cover portion (123) separated from the first upper cover portion (122), and integrally formed with the second side cover portion (126); and
a joint bracket unit (124) connected to the first upper cover portion (122) and the second upper cover portion (123), and configured to support the first upper cover portion (122) and the second upper cover portion (123) horizontally movably at a same height.

2. The cell assembly (100) according to claim 1, wherein the cell cover (120) covers the cell stack (110) such that a bottom portion of the cell stack (110) is exposed.

3. The cell assembly (100) according to claim 1, wherein the joint bracket unit (124) includes:
a cover plate portion (124a) disposed on the first upper cover portion (122) and the second upper cover portion (123); and
a link portion (124b) disposed in at least one end portion of the cover plate portion (124a) along a lengthwise direction (X) of the cover plate portion (124a), and having a bent shape to cover an end portion of the first upper cover portion (122) and an end portion of the second upper cover portion (123) in an inward direction.

4. The cell assembly (100) according to claim 3, wherein the link portion (124b) includes:
a bent portion (124c) bent in the downward direction from an end portion of the cover plate portion (124a); and
a support portion (124d) extending in a direction perpendicular to the bent portion (124c), and configured to support the first upper cover portion (122) and the second upper cover portion (123) together below the first upper cover portion (122) and the second upper cover portion (123).

5. The cell assembly (100) according to claim 1, wherein the joint bracket unit (124) has a first fastening hole (H1-H6) at a preset location, and
wherein the first upper cover portion (122) and the second upper cover portion (123) include at least one second fastening hole (K1-K6) that vertically matches the first fastening hole (H1-H6) by a relative movement with respect to the joint bracket unit (124).

6. The cell assembly (100) according to claim 1, wherein the joint bracket unit (124) includes:
a first cover plate portion (127) disposed on the first upper cover portion (122) and the second upper cover portion (123);
a second cover plate portion (128) disposed below the first upper cover portion (122) and the second upper cover portion (123); and
a connection portion (129) covering an end portion of the first upper cover portion (122) and an end portion of the second upper cover portion (123) together and connecting the first cover plate portion (127) to the second cover plate portion (128).

7. The cell assembly (100) according to claim 6, wherein the first cover plate portion (127) has a first long hole (J1 ,J2) at a preset location,
each of the first upper cover portion (122) and the second upper cover portion (123) has a second long hole (P1, P2), and
the first long hole (J1, J2) and the second long hole (P1, P2) match each other at least in part by the horizontal movement of the first upper cover portion (122) or the second upper cover portion (123).

8. The cell assembly (100) according to claim 1, further comprising:
a busbar assembly (130) having a terminal busbar (131) electrically connected to an electrode lead (111a) of the pouch-type battery cell (111).

9. A battery pack (10), comprising:
a cell assembly group (11) including the cell assemblies (100) according to any one of claims 1 to 8 stacked in a direction; and
a pack case (200) including a pack tray (210) on which the cell assembly group (11) is mounted, and a pack cover (220) covering the cell assembly group (11).

10. The battery pack (10) according to claim 9, wherein the cell assembly group (11) is adhered and fixed to an upper surface of the pack tray (210).

11. The battery pack (10) according to claim 9, wherein the pack tray (210) includes a cooling channel (211) in which a cooling medium flows.

12. The battery pack (10) according to claim 9, wherein the pack tray (210) has a fixing groove to which a lower end of the cell cover (120) is inserted and fixed.

13. A vehicle comprising the battery pack (10) according to claim 9.

## Patentansprüche

1. Zellenanordnung (100), umfassend:
einen Zellenstapel (110), welcher zwei oder mehr gestapelte Batteriezellen (111) vom Beuteltyp umfasst; und
eine Zellenabdeckung (120), welche zwei Seitenabschnitte des Zellenstapels (110) entlang einer Breitenrichtung des Zellenstapels (110) und einen oberen Abschnitt des Zellenstapels (110) abdeckt, wobei die Zellenabdeckung (120) dazu eingerichtet ist, eine Breite der Zellenabdeckung (120) gemäß einer Breite des Zellenstapels (110) anzupassen, und umfasst:
einen breitenanpassenden oberen Abdeckungsabschnitt (121), welcher einen oberen Flächenabschnitt des Zellenstapels (110) abdeckt und eine variabel anpassbare Breite aufweist;
einen ersten Seitenabdeckungsabschnitt (125), welcher sich in einer Abwärtsrichtung von einem Rand (E1) an einer Seite des breitenanpassenden oberen Abdeckungsabschnitts (121) erstreckt und einen Seitenabschnitt des Zellenstapels (110) abdeckt; und
einen zweiten Seitenabdeckungsabschnitt (126), welcher sich in der Abwärtsrichtung von einem Rand an der anderen Seite des breitenanpassenden oberen Abdeckungsabschnitts (121) erstreckt und den anderen Seitenabschnitt des Zellenstapels (110) abdeckt,
wobei die Zellenanordnung (100) **dadurch gekennzeichnet ist, dass** der breitenanpassende obere Abdeckungsabschnitt (121) umfasst:
einen ersten oberen Abdeckungsabschnitt (122), welcher integral mit dem ersten Seitenabdeckungsabschnitt (125) ausgebildet ist;
einen zweiten oberen Abdeckungsabschnitt (123), welcher von dem ersten oberen Abdeckungsabschnitt (122) getrennt ist und integral mit dem zweiten Seitenabdeckungsabschnitt (126) ausgebildet ist; und
eine Verbindungsbügeleinheit (124), welche mit dem ersten oberen Abdeckungsabschnitt (122) und dem zweiten oberen Abdeckungsabschnitt (123) verbunden ist und dazu eingerichtet ist, den ersten oberen Abdeckungsabschnitt (122) und den zweiten oberen Abdeckungsabschnitt (123) horizontal beweglich an einer gleichen Höhe zu haltern.

2. Zellenanordnung (100) nach Anspruch 1, wobei die Zellenabdeckung (120) den Zellenstapel (110) derart abdeckt, dass ein unterer Abschnitt des Zellenstapels (110) freigelegt ist.

3. Zellenanordnung (100) nach Anspruch 1, wobei die Verbindungsbügeleinheit (124) umfasst:
einen Abdeckungsplattenabschnitt (124a), welcher an dem ersten oberen Abdeckungsabschnitt (122) und dem zweiten oberen Abdeckungsabschnitt (123) angeordnet ist; und
einen Verknüpfungsabschnitt (124b), welcher in wenigstens einem Endabschnitt des Abdeckungsplattenabschnitts (124a) entlang einer Längsrichtung (X) des Abdeckungsplattenabschnitts (124a) angeordnet ist und eine gebogene Form aufweist, um einen Endabschnitt des ersten oberen Abdeckungsabschnitts (122) und einen Endabschnitt des zweiten oberen Abdeckungsabschnitts (123) in einer Einwärtsrichtung abzudecken.

4. Zellenanordnung (100) nach Anspruch 3, wobei der Verknüpfungsabschnitt (124b) umfasst:
einen gebogenen Abschnitt (124c), welcher in der Abwärtsrichtung von einem Endabschnitt des Abdeckungsplattenabschnitts (124a) gebogen ist; und
einen Halterungsabschnitt (124d), welcher sich in einer Richtung senkrecht zu dem gebogenen Abschnitt (124c) erstreckt und dazu eingerichtet ist, den ersten oberen Abdeckungsabschnitt (122) und den zweiten oberen Abdeckungsabschnitt (123) zusammen unter dem ersten oberen Abdeckungsabschnitt (122) und dem zweiten oberen Abdeckungsabschnitt (123) zu haltern.

5. Zellenanordnung (100) nach Anspruch 1, wobei die Verbindungsbügeleinheit (124) ein erstes Befestigungsloch (H1 - H6) an einer vorfestgelegten Stelle aufweist; und
wobei der erste obere Abdeckungsabschnitt (122) und der zweite obere Abdeckungsabschnitt (123) wenigstens ein zweites Befestigungsloch (K1 - K6) umfassen, welches vertikal mit dem ersten Befestigungsloch (H1 - H6) durch eine Relativbewegung in Bezug auf die Verbindungsbügeleinheit (124) übereinstimmt.

6. Zellenanordnung (100) nach Anspruch 1, wobei die Verbindungsbügeleinheit (124) umfasst:
einen ersten Abdeckungsplattenabschnitt (127), welcher an dem ersten oberen Abdeckungsabschnitt (122) und dem zweiten oberen Abdeckungsabschnitt (123) angeordnet ist;
einen zweiten Abdeckungsplattenabschnitt (128), welcher unter dem ersten oberen Abdeckungsabschnitt (122) und dem zweiten oberen Abdeckungsabschnitts (123) angeordnet ist; und
einen Verbindungsabschnitt (129), welcher einen Endabschnitt des ersten oberen Abdeckungsabschnitts (122) und einen Endabschnitt des zweiten oberen Abdeckungsabschnitts (123) zusammen abdeckt und den ersten Abdeckungsplattenabschnitt (127) mit dem zweiten Abdeckungsplattenabschnitt (128) verbindet.

7. Zellenanordnung (100) nach Anspruch 6, wobei der erste Abdeckungsplattenabschnitt (127) ein erstes Langloch (J1, J2) an einer vorfestgelegten Stelle aufweist;
wobei jeder aus dem ersten oberen Abdeckungsabschnitt (122) und dem zweiten oberen Abdeckungsabschnitt (123) ein zweites Langloch (P1, P2) aufweist; und
wobei das erste Langloch (J1, J2) und das zweite Langloch (P1, P2) wenigstens teilweise durch die horizontale Bewegung des ersten oberen Abdeckungsabschnitts (122) oder des zweiten oberen Abdeckungsabschnitts (123) miteinander übereinstimmen.

8. Zellenanordnung (100) nach Anspruch 1, ferner umfassend:
eine Sammelschienenanordnung (130), welche eine Anschlusssammelschiene (131) aufweist, welche elektrisch mit einer Elektrodenleitung (111a) der Batteriezelle (111) vom Beuteltyp verbunden ist.

9. Batteriepack (10), umfassend:
eine Zellenanordnungsgruppe (11), welche die Zellenanordnungen (100) nach einem der Ansprüche 1 bis 8 umfasst, welche in einer Richtung gestapelt sind; und
ein Packgehäuse (200), welches eine Packschale (210), an welcher die Zellenanordnungsgruppe (11) montiert ist, und eine Packabdeckung (220) umfasst, welche die Zellenanordnungsgruppe (11) abdeckt.

10. Batteriepack (10) nach Anspruch 9, wobei die Zellenanordnungsgruppe (11) an einer oberen Fläche der Packschale (210) angeklebt und fixiert ist.

11. Batteriepack (10) nach Anspruch 9, wobei die Packschale (210) einen Kühlkanal (211) umfasst, in welchem ein Kühlmedium fließt.

12. Batteriepack (10) nach Anspruch 9, wobei die Packschale (210) eine Fixierungsnut aufweist, in welcher ein unteres Ende der Zellenabdeckung (120) eingeführt und fixiert ist.

13. Fahrzeug, umfassend den Batteriepack (10) nach Anspruch 9.

## Revendications

1. Ensemble de cellules (100), comprenant :
un empilement de cellules (110) comportant deux cellules de batterie de type poche (111) ou plus empilées ; et
un couvercle de cellules (120) recouvrant deux parties latérales de l'empilement de cellules (110) le long d'une direction de largeur de l'empilement de cellules (110) et une partie supérieure de l'empilement de cellules (110),
dans lequel le couvercle de cellules (120) est configuré pour ajuster une largeur du couvercle de cellules (120) selon une largeur de l'empilement de cellules (110) et comporte :
une partie de couvercle supérieure à largeur réglable (121) recouvrant une partie de surface supérieure de l'empilement de cellules (110), et présentant une largeur réglable de manière variable ;
une première partie de couvercle latérale (125) s'étendant dans une direction descendante à partir d'un bord (E1) d'un côté de la partie de couvercle supérieure à largeur réglable (121) et recouvrant une partie latérale de l'empilement de cellules (110) ; et
une deuxième partie de couvercle latérale (126) s'étendant vers le bas à partir d'un bord de l'autre côté de la partie de couvercle supérieure à largeur réglable (121) et recouvrant l'autre partie latérale de l'empilement de cellules (110),
l'ensemble de cellules (100) étant **caractérisé en ce que** la partie de couvercle supérieure à largeur réglable (121) comporte :
une première partie de couvercle supérieure (122) formée d'un seul tenant avec la première partie de couvercle latérale (125) ;
une deuxième partie de couvercle supérieure (123) séparée de la première partie de couvercle supérieure (122), et formée d'un seul tenant avec la deuxième partie de couvercle latérale (126) ; et
une unité de support de jonction (124) raccordée à la première partie de couvercle supérieure (122) et à la deuxième partie de couvercle supérieure (123), et configurée pour supporter la première partie de couvercle supérieure (122) et la deuxième partie de couvercle supérieure (123) de manière mobile horizontalement à une même hauteur.

2. Ensemble de cellules (100) selon la revendication 1, dans lequel le couvercle de cellules (120) recouvre l'empilement de cellules (110) de sorte qu'une partie inférieure de l'empilement de cellules (110) soit exposée.

3. Ensemble de cellules (100) selon la revendication 1, dans lequel l'unité de support de jonction (124) comporte :
une partie de plaque de couvercle (124a) disposée sur la première partie de couvercle supérieure (122) et la deuxième partie de couvercle supérieure (123) ; et
une partie de liaison (124b) disposée dans au moins une partie d'extrémité de la partie de plaque de couvercle (124a) le long d'une direction longitudinale (X) de la partie de plaque de couvercle (124a), et présentant une forme courbée pour recouvrir une partie d'extrémité de la première partie de couvercle supérieure (122) et une partie d'extrémité de la deuxième partie de couvercle supérieure (123) dans une direction vers l'intérieur.

4. Ensemble de cellules (100) selon la revendication 3, dans lequel la partie de liaison (124b) comporte :
une partie courbée (124c) courbée vers le bas à partir d'une partie d'extrémité de la partie de plaque de couvercle (124a) ; et
une partie de support (124d) s'étendant dans une direction perpendiculaire à la partie courbée (124c), et configurée pour supporter la première partie de couvercle supérieure (122) et la deuxième partie de couvercle supérieure (123) ensemble sous la première partie de couvercle supérieure (122) et la deuxième partie de couvercle supérieure (123).

5. Ensemble de cellules (100) selon la revendication 1, dans lequel l'unité de support de jonction (124) présente un premier trou de fixation (H1-H6) à un emplacement prédéfini, et
dans lequel la première partie de couvercle supérieure (122) et la deuxième partie de couvercle supérieure (123) comportent au moins un deuxième trou de fixation (K1-K6) qui correspond verticalement au premier trou de fixation (H1-H6) par un mouvement relatif par rapport à l'unité de support de jonction (124).

6. Ensemble de cellules (100) selon la revendication 1, dans lequel l'unité de support de jonction (124) comporte :
une première partie de plaque de couvercle (127) disposée sur la première partie de couvercle supérieure (122) et la deuxième partie de couvercle supérieure (123) ;
une deuxième partie de plaque de couvercle (128) disposée sous la première partie de couvercle supérieure (122) et la deuxième partie de couvercle supérieure (123) ; et
une partie de raccordement (129) recouvrant ensemble une partie d'extrémité de la première partie de couvercle supérieure (122) et une partie d'extrémité de la deuxième partie de couvercle supérieure (123) et raccordant la première partie de plaque de couvercle (127) à la deuxième partie de plaque de couvercle (128).

7. Ensemble de cellules (100) selon la revendication 6, dans lequel la première partie de plaque de couvercle (127) présente un premier trou long (J1, J2) à un emplacement prédéfini,
chacune de la première partie de couvercle supérieure (122) et de la deuxième partie de couvercle supérieure (123) présente un deuxième trou long (P1, P2), et
le premier trou long (J1, J2) et le deuxième trou long (P1, P2) correspondent au moins en partie l'un à l'autre par le mouvement horizontal de la première partie de couvercle supérieure (122) ou de la deuxième partie de couvercle supérieure (123).

8. Ensemble de cellules (100) selon la revendication 1, comprenant en outre :
un ensemble barre omnibus (130) présentant une barre omnibus à borne (131) connectée électriquement à un fil d'électrode (111a) de la cellule de batterie de type poche (111).

9. Bloc-batterie (10), comprenant :
un groupe d'ensembles de cellules (11) comportant les ensembles de cellules (100) selon l'une quelconque des revendications 1 à 8 empilés dans une direction ; et
un boîtier de bloc (200) comportant un plateau de bloc (210) sur lequel le groupe d'ensembles de cellules (11) est monté, et un couvercle de bloc (220) recouvrant le groupe d'ensembles de cellules (11).

10. Bloc-batterie (10) selon la revendication 9, dans lequel le groupe d'ensembles de cellules (11) est collé et fixé à une surface supérieure du plateau de bloc (210).

11. Bloc-batterie (10) selon la revendication 9, dans lequel le plateau de bloc (210) comporte un canal de refroidissement (211) dans lequel s'écoule un milieu de refroidissement.

12. Bloc-batterie (10) selon la revendication 9, dans lequel le plateau de bloc (210) présente une rainure de fixation dans laquelle une extrémité inférieure du couvercle de cellules (120) est insérée et fixée.

13. Véhicule comprenant le bloc-batterie (10) selon la revendication 9.
